(19) **Europäisches Patentamt**
**European Patent Office**
**Office européen des brevets**

(11) **EP 3 588 439 A1**

(12) **EUROPEAN PATENT APPLICATION**

(43) Date of publication:
**01.01.2020 Bulletin 2020/01**

(51) Int Cl.:
***G06T 11/00*** (2006.01)

(21) Application number: **18305803.1**

(22) Date of filing: **25.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings**
**75017 Paris (FR)**

(72) Inventors:
• **SERVANT, Fabien**
**35576 Cesson-Sévigné (FR)**
• **XU, Yihong**
**35576 Cesson-Sévigné (FR)**
• **ROBERT, Philippe**
**35576 Cesson-Sévigné (FR)**

(74) Representative: **Amor, Rim et al**
**InterDigital CE Patent Holdings**
**20, rue Rouget de Lisle**
**92130 Issy-les-Moulineaux (FR)**

(54) **METHOD AND DEVICE FOR PROCESSING A SEQUENCE OF ORIGINAL FRAMES**

(57) The disclosure relates to a method and device for processing a sequence of original frames, comprising, for at least one original frame of the sequence, called a current original frame:

- obtaining (11) a current modified frame $O_t$, from the current original frame $I_t$,

- estimating (12) an optical flow between a preceding original frame $I_{t-1}$ and the current original frame $I_t$,

- obtaining (13) an estimate of the current modified frame $O'_t$, from the estimated optical flow and a preceding modified frame, obtained from the preceding original frame $I_{t-1}$ and previously updated or adjusted, and

- obtaining (14) an updated current modified frame $O''_t$, from the current modified frame $O_t$ and the estimate of the current modified frame $O'_t$.

Fig. 1

EP 3 588 439 A1

**Description**

**1. Technical field**

The present disclosure relates to the field of images or frames processing. More specifically, the present disclosure offers a technique aiming at reducing flickering in a sequence of modified frames.

The present disclosure is particularly adapted to reduce flickering in a sequence of modified frames obtained by transferring a style, i.e. texture(s) and color(s), on a sequence of original frames.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it is understood that these statements are to be read in this light, and not as admissions of prior art.

In the continuation of this document, effort will be made more particularly to describe existing problems in the field of style transfer. The present disclosure is of course not limited to this particular field of applications, but is of interest in any image processing technique having to confront close or similar problems.

Different techniques using a neural network to extract style from a frame and mix it with another frame, called neural style transfer, are known. For example, L.A. Gatys et al. disclose an optimization-based style transfer method in "Image Style Transfer Using Convolutional Neural Networks" (IEEE Conference on Computer Vision and Pattern Recognition (CVPR), 2016), and J. Johnson et al. disclose a real-time style transfer method in "Perceptual losses for real-time style" (European Conference on Computer Vision, 2016).

However, traditional neural style transfer techniques suffer from one or more drawbacks:

- style transfer is time-taking because of the optimization process,
- instability of video style transfer, where original static background becomes noisy and has flickering and fast-changing artifacts at stylized outputs.

Flickering is not desired, especially in the field of augmented reality, as it might cause dizziness of the user who is immersed in an augmented-reality environment. In addition, it is desired to process the frames at real time to avoid visible display lag.

There is thus a need for a new technique for processing a sequence of original frames, for example by transferring a style to the sequence of original frames, that overcomes at least one of the above identified drawbacks.

**3. Summary**

The present disclosure relates to a method for processing a sequence of original frames, said method comprising, for at least one original frame of the sequence, called a current original frame:

- obtaining a current modified frame, from the current original frame,
- estimating an optical flow between a preceding original frame and the current original frame,
- obtaining an estimate of the current modified frame, from the estimated optical flow and a preceding modified frame, obtained from the preceding original frame, and previously updated or adjusted, and,
- obtaining an updated current modified frame, from the current modified frame and the estimate of the current modified frame.

At least one embodiment of the present disclosure relates to a **device for processing** a sequence of original frames, said device comprising at least one processor adapted and configured for:
for at least one original frame of the sequence, called a current original frame:

- obtaining a current modified frame, from the current original frame,
- estimating an optical flow between a preceding original frame and the current original frame,
- obtaining an estimate of the current modified frame, from the estimated optical flow and a preceding modified frame, obtained from the preceding original frame and previously updated or adjusted, and
- obtaining an updated current modified frame, from the current modified frame and the estimate of the current modified frame.

The present disclosure thus offers a technique for processing a sequence of original frames, to obtain a sequence of modified frames, and for updating the modified frames.

According to at least one embodiment, at least one preceding modified frame, that can be previously updated or adjusted, is used to update the current modified frame. By taking account of preceding modified frames, such technique makes it possible to reduce flickering in the sequence of modified frames, compared to prior art technique in which each frame is processed independently.

At least one embodiment also relates to a computer program product downloadable from a communication network and/or recorded on a medium readable by computer and/or executable by a processor comprising software code adapted to perform a method for processing a sequence of original frames according to the disclosure when it is executed by a processor.

**4. Brief description of the drawings**

The disclosure will be better understood and illustrated by means of the following embodiment and execution examples, in no way limitative, with reference to the appended figures in which:

- Figure 1 is a flow chart illustrating the main steps of a method for processing a sequence of original frames according to an embodiment of the disclosure;
- Figure 2 is a flow chart illustrating the main steps of a method for processing a sequence of original frames according to another embodiment of the disclosure;
- Figure 3 is a block diagram of a device implementing the method for processing a sequence of original frames according to Figures 1 or 2.

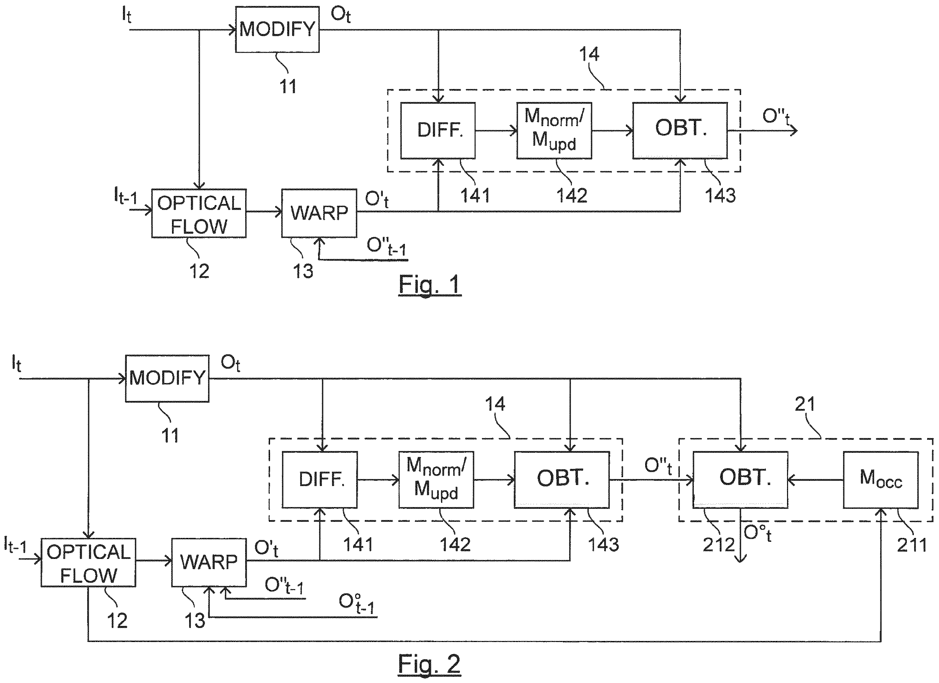

In Figures 1 to 3, the represented blocks are purely functional entities, which do not necessarily correspond to physically separate entities. Namely, they could be developed in the form of software, hardware, or be implemented in one or several integrated circuits, comprising one or more processors.

**5. Description of embodiments**

*5.1 General principle*

It is to be understood that the figures and descriptions of the present disclosure have been simplified to illustrate elements that are relevant for a clear understanding of the present disclosure, while eliminating, for purposes of clarity, many other elements found in typical devices for processing images.

The general principle of the present disclosure relies on obtaining modified frames, from a sequence of original frames, and further processing the modified frames, to reduce flickering in the sequence of modified frames. Such modified frames can be obtained by any transformation that is noise sensitive, for example segmentation or style transfer.

The present disclosure is thus particularly adapted to reduce flickering in a sequence of modified frames obtained by transferring a style, i.e. texture(s) and color(s), on a sequence of original frames. In this particular field of application, a style of a reference image, denoted as style image, is transferred into another image, denoted as content image.

Style transfer can be used in many domains such as movie productions, mobile applications for photo stylizing, etc. A use case example is to continuously transfer the style of a reference image to video frames captured by a camera of augmented reality (AR) devices such as AR glasses, tablets and smartphones, etc. Reference images can be for example third party style image(s) independent from AR videos or image(s) selected from AR videos.

The present disclosure is thus particularly adapted to any application in which style transfer is used.

*5.2 Temporal filtering*

At least one embodiment of the method for processing a sequence of original frames of the present disclosure is illustrated in **Figure 1**. This embodiment implements a temporal filtering aiming at stabilizing the sequence of modified frames, and in particular at reducing flickering caused, for example, by style transfer.

This embodiment can be implemented for at least one original frame of the sequence at time $t$, denoted as current original frame $I_t$ and possibly for each original frame of the sequence.

According to such embodiment, the method comprises, in block 11, obtaining a modified frame at time $t$, denoted as current modified frame $O_t$, from the current original frame $I_t$.

For example, obtaining a current modified frame $O_t$ comprises applying a style to the current original frame. The current modified frame $O_t$ can be a styled frame, obtained by transferring a style on the current original frame $I_t$.

According to a specific embodiment, obtaining a current modified frame $O_t$ comprises passing the current original frame to a feed forward network. Block 11 can thus use a pre-trained feed forward network, such as the one disclosed by J. Johnson et al. in previously cited document "Perceptual losses for real-time style", to apply style transfer to the current original frame $I_t$. Another feed forward network, such as described later in the document, can also be used to speed-up the style transfer.

In block 12, an optical flow between an original frame of the sequence at time $t$ - 1, denoted as preceding original frame $I_{t-1}$ and the current original frame $I_t$ is estimated.

Optical flow estimation is used to estimate movement under the hypothesis that intensity change is negligible when a pixel at frame $t$ - 1 moves with a small displacement to frame $t$. The displacement between two consecutive frames for each pixel $(x,y)$ in both vertical $u(x,y)$ and horizontal $v(x,y)$ directions can be calculated using Taylor Expansion.

Optical flow estimation can be implemented using any known technique. For example, the optical flow is estimated using the "FlowNet" conventional estimator, such as FlowNet2 or FlowNet2-ss, described in "Flownet 2.0: Evolution of optical flow estimation with deep networks", E. Ilg et al., IEEE Conference on Computer Vision and Pattern Recognition (CVPR), 2017. FlowNet estimator is an example of neural network that can be used as deep learning based optical flow estimator. "Epic flow", such as disclosed in "Epicflow: Edge-preserving interpolation of correspondences for optical flow, J. Revaud et al., IEEE Conference on Computer Vision and Pattern Recognition (CVPR), 2015, or "Deep flow", such as disclosed in "Deepflow: Large displacement optical flow with deep matching", P. Weinzaepfel et al., IEEE International Conference on Computer Vision (ICCV), 2013, are other examples of estimators for estimating backward and forward optical flows.

In block 13, an estimate of the current modified frame, denoted $O'_t$, is obtained from the estimated optical flow and a preceding modified frame, previously updated $(O''_{t-1})$ or adjusted $(O^o_{t-1})$. Such updated preceding modified frame $O''_{t-1}$, or adjusted modified frame $O^o_{t-1}$, can be obtained from the preceding original frame $I_{t-1}$ by obtaining a preceding modified frame $O_{t-1}$ and by updating the preceding modified frame and/or adjusting the preceding modified frame.

More specifically, the optical flow estimate can be used to warp the updated preceding modified frame at time $t$ - 1, $O''_{t-1}$, or the adjusted preceding modified frame at time $t$ - 1, $O^o_{t-1}$, to obtain an estimate of the current modified frame at time $t$, $O'_t$.

Then, in block 14, an updated current modified frame at time $t$, denoted $O''_t$, is obtained from the current modified frame $O_t$ and the estimate of the current modified frame $O'_t$.

It can thus be noted that the updating of a current modified frame is performed after the transformation of the current original frame into a current modified frame, that is for example after applying a style to the current original frame.

According to at least one embodiment, obtaining an updated current modified frame in block 14 comprises:

- obtaining 141 a simple mask M corresponding to an absolute difference between the current modified frame $O_t$ and the estimate of the current modified frame $O'_t$. Such simple mask corresponds for example to a grayscale absolute difference;
- normalizing 142 the simple mask, to obtain a normalized simple mask $M_{norm}$ comprising coefficients ranging between [0,1]:

$$M_{norm} = (M - \min(M))/(\max(M) - \min(M))$$

- obtaining 143 the updated current modified frame $O''_t$ by applying the normalized simple mask $M_{norm}$ to the current modified frame $O_t$ and the complement of the normalized simple mask $M_{norm}$ to the estimate of the current modified frame $O'_t$:

$$O''_t = (1 - M_{norm}) \times O'_t + M_{norm} \times O_t$$

In other words, a new input is obtained by combining the current modified frame $O_t$ and the estimate of the current modified frame $O'_t$.

Such combination gives more weight to the current modified frame $O_t$, compared to the estimate of the current modified frame $O'_t$ (obtained from the estimated optical flow and a preceding modified frame), when the absolute difference between the current modified frame $O_t$ and the estimate of the current modified frame $O'_t$ increases.

Thanks to this combination, the uncertain motion boundaries due to the precision of the optical flow estimator and disocclusion parts have relatively bigger values in the mask and are thus preserved by the current modified frame output $O_t$. On the contrary, the noisy patterns in the flat background are smoothed, thus reducing flicker.

According to at least one embodiment, in order to initialize the process, the method for processing a sequence of original frames also comprises:

for the first original frame $I(1)$ of the sequence, obtaining a first modified frame $O(1)$, from the first original frame $I(1)$,
for the second original frame $I(2)$ of the sequence,

- obtaining a second modified frame $O(2)$, from the second original frame $I(2)$,
- estimating an optical flow between the first original frame $I(1)$ and the second original frame $I(2)$,
- obtaining an estimate of the second modified frame $O'(2)$, from the estimated optical flow and the first modified frame $O(1)$,

- obtaining an updated second modified frame $O''(2)$, from the second modified frame $O(2)$ and the estimate of the second modified frame $O'(2)$.

*5.3 Improving the temporal filtering by processing occlusion areas*

Using the simple mask, we obtain a new output $O''_t$ by combining the current modified frame $O_t$ and the estimate of the current modified frame $O'_t$, aiming at reducing flickering.

However, "blurring" effect can appear when there is at least one fast-moving object in the sequence of original frames that the estimator fails to estimate. In this case, in particular when such object has complex motions, errors in the estimation can be cumulated and passed to the following frames through warping in block 13 and combination in block 143. A better estimator, such as FlowNet2 or FlowNet2-ss, can be used in this case in order to reduce the blurring effect.

As already mentioned, different optical flows estimators can be used according to other embodiments, such as for example "Epic flow" or "Deep flow" estimators.

In addition, even if the temporal filtering makes it possible to reduce flickering, errors can still occur in the processing of occlusion/disocclusion areas, and/or motion boundaries.

According to at least one embodiment of the disclosure, an additional mask can thus be used to specifically process the disoccluded areas and motion boundaries, where the error occurs. Such additional mask can be used to further improve the sequence of modified frames.

According to such embodiment, the method for processing a sequence of original frames further comprises obtaining an adjusted modified frame $O^o_t$ from the updated current modified frame $O''_t$ and the current modified frame $O_t$.

As illustrated in **Figure 2,** obtaining an adjusted current modified frame $O^o_t$ is for example implemented in block 21 and comprises:

- obtaining 211 an occlusion mask, dedicated to the process of occlusion areas,
- obtaining 212 the adjusted current modified frame $O^o_t$ by applying the occlusion mask to the updated current modified frame $O''_t$ and the complement of the occlusion mask to the current modified frame $O_t$:

$$O^o_t = M_{occ} \times O''_t + (1 - M_{occ}) \times O_t$$

According to a specific embodiment, occlusion areas are detected by checking the consistency of the forward optical flow (from the preceding original frame $I_{t-1}$ to the current original image $I_t$) and the backward optical flow (from the current original image $I_t$ to the preceding original frame $I_{t-1}$).

More specifically, for a pixel (x, y) in the current original image $I_t$, the occlusion mask is for example equal to:

- 0 if either $|\tilde{f} + \hat{f}|^2 > 0.01\ (|\tilde{f}|^2 + |\hat{f}|^2) + 0.5$ or $|\vec{\nabla}\hat{u}|^2 + |\vec{\nabla}\hat{v}|^2 > 0.01|\hat{f}| + 0.002$,
- 1 otherwise,

where:

- $\tilde{f}$ is the estimate of the optical flow between the preceding original frame $I_{t-1}$ and the current original image $I_t$,
- $\hat{f}$ is the estimate of the optical flow between the current original image $I_t$ and the preceding original frame $I_{t-1}$,
- $\vec{\nabla}\hat{u}$ is the gradient of the estimate of the optical flow between the current original image $I_t$ and the preceding original frame $I_{t-1}$ for the u-component (vertical) of the pixel (x, y),
- $\vec{\nabla}\hat{v}$ is the gradient of the estimate of the optical flow between the current original image $I_t$ and the preceding original frame $I_{t-1}$ for the v-component (horizontal) of the pixel (x, y).

The first inequality $|\tilde{f} + \hat{f}|^2 > 0.01\ (|\tilde{f}|^2 + |\hat{f}|^2) + 0.5$ can be used to remove the points belonging to an occlusion area (point getting disoccluded in the current original image $I_t$, with reference to the preceding original image $I_{t-1}$, also called forward disocclusion). According to the first inequality, the distance between a pixel (x, y) in the current original image $I_t$, and the estimation of the position of the same pixel (x, y) in the current original image $I_t$ is compared to a threshold. The estimation of the position of the pixel in the current original image $I_t$ can be obtained by applying the backward optical flow to the pixel (x, y) in the current original image $I_t$, to estimate its position in the preceding original image $I_{t-1}$, and by applying the forward optical flow to the estimate of the pixel in the preceding original image $I_{t-1}$.

The second inequality $|\vec{\nabla}\hat{u}|^2 + |\vec{\nabla}\hat{v}|^2 > 0.01|\hat{f}| + 0.002$ can be used to remove the points on motion boundaries. When the movement of a pixel varies a lot with respect to its neighboring pixels, it means that this pixel is on the boundary of an object. Its motion vector has a low confidence and should not be considered.

Such inequalities are detailed in the document "Dense point trajectories by GPU-accelerated large displacement optical flow", N. Sundaram et al., European conference on computer vision, 2010.

According to this embodiment, the occlusion mask $M_{occ}$ takes a value 0, or close to 0 (for example comprised within [0,0.1]) in the areas where at least one of the inequalities is met, and a value equal to 1, or close to 1 (for example comprised within [0.9,1]) elsewhere.

The proposed combination used to obtain the adjusted current modified frame $O_t^o$ thus gives more weight to the current modified frame $O_t$, compared to the updated current modified frame $O_t''$, when the value of the mask $M_{occ}$ is equal to 0 (corresponding to a point getting disoccluded or on motion boundaries in the current original image $I_t$, with reference to the preceding original image $I_{t-1}$), and more weight to the updated current modified frame $O_t''$, compared to the current modified frame $O_t$, when the value of the mask $M_{occ}$ is equal to 1.

According to at least one embodiment, using a simple mask to update the current modified frame $(O_t'')$, an additional mask to cover the disoccluded areas and adjust the current modified frame $(O_t^o)$, and possibly a more precise version of the optical flow estimator for getting backward and forward optical flows during obtaining the additional mask, aim at reducing flickering while processing disocclusion areas and uncertain motion boundaries.

According to another embodiment, such occlusion mask can be used to reduce flickering without the temporal filtering previously described, i.e. without block 14 illustrated in Figure 2.

*5.4 Improving the temporal filtering using an updated mask*

Using the simple mask, we obtain a new a new output $O_t''$ by combining the current modified frame $O_t$ and the estimate of the current modified frame $O'_t$, aiming at reducing flickering.

Using the occlusion mask on the updated current modified frame $O_t''$ obtained with the simple mask, we obtain a new output $O_t^o$, in which the disoccluded areas and motion boundaries are processed.

However, "ghosting" effect can also appear depending on the precision of the optical flow estimator used in block 12. For instance, when an object moves with respect to the background between successive frames, the boundaries of the object could not move to the right place if errors on the estimated motions occur. This creates a "long tail" behind the moving object, creating a "ghost" of the object in the background.

In order to reduce such effect, an updated mask can be used to obtain the updated current modified frame.

For example, the simple mask obtained in block 141, in Figure 1 or 2, can be updated by passing the simple mask, or the normalized simple mask, to a convolutional neural network in block 142, to obtain an updated mask $M_{upd}$. In other words, the absolute difference between the estimate of the current modified frame $O'_t$ (warped output $O'_t$) and current modified frame $O_t$ is passed to a convolutional neural network.

A conventional convolutional neural network is a network concatenated with multiple layers, where each layer consists of a convolution operation and/or a pooling operation. Each layer has several filters.

More precisely, a convolution operation applies a 2D weighted filter to an input image, for example the simple mask M or the normalized simple mask $M_{norm}$ according to the disclosure. Such filter is usually a 2D matrix with a smaller size than the input image. The multiplication between pixels goes through the entire input image with a pre-defined moving step called "stride". With a bigger stride, the size of the outputs, named "feature maps", becomes smaller. The results of the multiplication within the filter area are then summed up to produce a new pixel (output of the filter) that represents them.

This operation can be followed by a pooling operation that takes the average or the maximum of neighboring pixel values as a representative pixel within this neighboring area. The pooling operation can largely reduce the size of the outputs which simplifies and thus accelerates the training process, which is the updating of weights of filters at each layer. In addition, an activation function can also be added after each layer to improve the non-linearity of the network.

To recover the size of the input image, transpose convolution layers (i.e. deconvolution layers, which invert the convolution) are added. A deconvolution layer is a learnable interpolation method used to conduct up-sampling.

For example, the convolutional neural network according to at least one embodiment comprises three layers, a first layer comprising a filter with 8 output channels of size 9x9, a second layer comprising a filter with 16 output channels of size 3x3, and a third layer comprising a filter with 32 output channels of size 3x3.

An example of such convolutional neural network is defined by the following table:

| Layer | Number of output channels | Size of filters |
|---|---|---|
| 1st convolution layer | 8 | 9x9 |
| 2nd convolution layer | 16 | 3x3 |
| 3rd convolution layer | 32 | 3x3 |
| 1st deconvolution layer | 16 | 3x3 |
| 2nd deconvolution layer | 8 | 3x3 |
| 3rd (de)convolution layer | 1 | 9x9 |
| Activation function = (tanh+1)/2 | | |

For each layer, an activation function, for example a "Rectified Linear Unit" (Relu) function, can be used to increase the non-linearity of the neural network. For the last layer, the activation function can be (tanh+1)/2, in order to place the output values within [0,1].

It can be noted that other convolutional neural networks, having a different number of layers, number of filters, or size, or using different activation functions, can also be implemented.

According to at least one embodiment, obtaining 143 the updated current modified frame $O''_t$ applies the updated mask $M_{upd}$ to the current modified frame $O_t$ and the complement of the updated mask $M_{upd}$ to the estimate of the current modified frame $O'_t$:

$$O''_t = \left(1 - M_{upd}\right) \times O'_t + M_{upd} \times O_t$$

Such combination gives more weight to the current modified frame $O_t$, compared to the estimate of the current modified frame $O'_t$ (obtained from the estimated optical flow and the updated preceding modified frame), when the value of $M_{upd}$ is high.

Such updated mask $M_{upd}$ can be obtained by using the previously presented convolutional neural network, that can produce a more sophisticated mask $M_{upd}$ which replaces the normalized simple mask $M_{norm}$, through updating its weights (of convolutional filters) respecting an objective function.

Such objective function is designed to train a mask that is used to produce an updated current modified frame $O''_t$ whose traceable parts (i.e. regions where the current modified frame $O'_t$ is a well motion-compensated prediction of the current modified frame $O_t$) are more similar to the estimate of the current modified frame $O'_t$ and the disoccluded areas are like the current modified frame $O_t$.

For example, the convolutional neural network used in block 142 to obtain an updated mask $M_{upd}$ can be previously trained by using two loss functions:

$$L_{cohe}(O''_t, O'_t) = M_{occ} \times \|O''_t - O'_t\|^2$$

and

$$L_{occ}(O''_t, O'_t) = (1 - M_{occ}) \times \|O''_t - O_t\|^2,$$

where $M_{occ}$ is the occlusion mask.

For example, for training data, 23 videos from Sintel dataset (images), such as disclosed in "A naturalistic open source movie for optical flow evaluation", Butler, D. J. et al., European Conference on Computer Vision (ECCV), 2012 (or http://sintel.is.tue.mpg.de/) and two videos with more homogeneous and noisy regions (where flickering greatly affects video visualization) can be used.

Once the convolutional neural network is trained, the method for processing a sequence of original can be implemented with or without the occlusion mask.

The occlusion mask previously defined can thus either or not be used. If used, the occlusion mask can be used on the updated current modified frame $O''_t$ obtained with the simple mask, or on the updated current modified frame $O''_t$ obtained with the updated mask, in order to obtain an adjusted current modified frame $O^o_t$.

Using an updated mask $M_{upd}$ to update the current modified frame $(O''_t)$, an additional mask $M_{occ}$ to cover the disoccluded areas and adjust the current modified frame $(O^o_t)$, and possibly a more precise version of the optical flow estimator for getting backward and forward optical flows during obtaining the additional mask, according to at least one embodiment, aim at reducing flickering while processing disocclusion areas and uncertain motion boundaries, as well as reducing the ghosting effect.

*5.5 Reducing computing time*

As already mentioned, modified frames are obtained by passing the original frames to a feed forward network. Such feed forward network can apply style transfer to the original frames.

In order to speed up the style transfer process, the number of output channels per filter in the feed forward network can be reduced compared to conventional feed forward network used for style transfer, such as the one disclosed by J. Johnson et al. in the previously cited document "Perceptual losses for real-time style".

For example, the feed forward network according to at least one embodiment comprises three layers, a first layer comprising a filter with 8 output channels, a second layer comprising a filter with 16 output channels, and a third layer comprising a filter with 32 output channels.

An example of such feed forward network is defined by the following table:

| Layer | Number of output channels |
| --- | --- |
| 1st convolution layer | 8 |
| 2nd convolution layer | 16 |
| 3rd convolution layer | 32 |
| 5 residual blocks | 32 |
| Upsampling + 1st conv. Layer | 16 |

(continued)

| Layer | Number of output channels |
|---|---|
| Upsampling + 2nd conv. Layer | 8 |
| 3rd (de)convolution layer | 3 |
| Activation function = 255*(tanh+1)/2 | |

For each layer, an activation function, for example a "Rectified Linear Unit" (Relu) function, can be used to increase the non-linearity of the neural network. For the last layer, the activation function can be 255*(tanh+1)/2, in order to place the output values within [0,255].

According to at least one embodiment, the style transfer process can be speeded up by about 50% by using such feed forward network, compared to the one disclosed by J. Johnson et al.. In particular, it can be noted that the reduction in the number of filters' output channels has little effect regarding the quality of the transformation (for example style transfer) of the original frames.

### 5.6 Device

The present disclosure also pertains to a device for processing a sequence of original frames, wherein said device comprises at least one processor adapted and configured for:
for at least one original frame of the sequence, called a current original frame:

- obtaining a current modified frame $O_t$, from the current original frame $I_t$,
- estimating an optical flow between a preceding original frame $I_{t-1}$ and the current original frame $I_t$,
- obtaining an estimate of the current modified frame $O'_t$, from the estimated optical flow and a preceding modified frame, obtained from the preceding original frame $I_{t-1}$ and previously updated $(O''_{t-1})$ or adjusted $(O^o_{t-1})$, and
- obtaining an updated current modified frame $O''_t$, from the current modified frame $O_t$ and the estimate of the current modified frame $O'_t$.

Such a device can be especially adapted to implement the method for processing a sequence of original frames described here above. It could of course comprise the different characteristics pertaining to the method according to an embodiment of the disclosure, which can be combined or taken separately. Thus, the characteristics and advantages of the device are the same as those of the method.

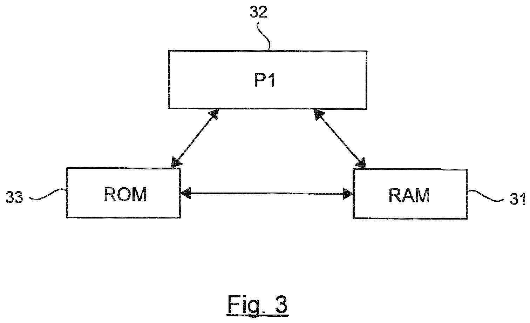

**Figure 3** schematically illustrates an example of a device for processing a sequence of original frames according to an embodiment of the disclosure. Only the main elements of the device are shown.

In an embodiment, a device for implementing the disclosed method comprises a non-volatile memory 33 (e.g. a read-only memory (ROM) or a hard disk), a volatile memory 31 (e.g. a random access memory or RAM) and at least one processor 32, for example the processor $P1$. The non-volatile memory 33 is a non-transitory computer-readable carrier medium. It stores executable program code instructions, which are executed by the at least one processor 32 in order to enable implementation of the method described above in its various embodiments.

In particular, the at least one processor 32 is adapted and configured to:

- obtain a current modified frame $O_t$, from a current original frame $I_t$,
- estimate an optical flow between a preceding original frame $I_{t-1}$ and the current original frame $I_t$,
- obtain an estimate of the current modified frame $O'_t$, from the estimated optical flow and a preceding modified frame $O_{t-1}$, and
- obtain an updated current modified frame $O''_t$, from the current modified frame $O_t$ and the estimate of the current modified frame $O'_t$.

Upon initialization, the aforementioned program code instructions are transferred from the non-volatile memory 33 to the volatile memory 31 so as to be executed by the at least one processor 32. The volatile memory 31 likewise includes registers for storing the variables and parameters required for this execution.

The steps of the method for processing a sequence of original frames according to at least one embodiment of the disclosure may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

The flowchart and/or block diagrams in the Figures illustrate the configuration, operation and functionality of possible implementations of devices, methods and computer program products according to various embodiments of the present disclosure. In this regard, each block in the flowchart or block diagrams may represent a module, segment, or portion of code, which comprises one or more executable instructions for implementing the specified logical function(s).

It is also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

Another aspect of the disclosure pertains to at least one computer program product downloadable from a communication network and/or recorded on a medium readable by computer and/or executable by a processor comprising software code adapted to perform a method for processing a sequence of original frames, wherein the software code is adapted to perform at least one of the steps of the method described above.

In addition, the present disclosure concerns a non-transitory computer readable medium comprising a computer program product recorded thereon and capable of being run by a processor, including program code instructions for implementing the method for processing a sequence of original frames previously described.

### 5.7 Results

The method for processing a sequence of original frames according to at least one embodiment of the disclosure thus outputs a sequence of updated or adjusted modified frames, for example stylized frames, having better stability compared to prior art technique, especially in terms of flickering.

Even with the additional process implemented on the modified frames, the framerate of style transfer can be high. For example, the framerates of style transfer are about 13 fps (using the "FlowNet2-ss" optical flow estimator, the updated mask for obtaining the updated modified frames, and the additional occlusion mask for processing the occlusion areas) and 17 fps (using the "FlowNet2-ss" optical flow estimator and the simple mask for obtaining the updated modified frames) for an image size of 512 X 512.

According to at least one embodiment, the style transfer process can be speeded up by about 50% by using a feed forward network with a reduced number of filters' output channels, compared to the one disclosed by J. Johnson et al.

### 5.8 Other embodiments

According to at least one embodiment, obtaining an updated current modified frame $O_t''$ comprises:

- obtaining a simple mask corresponding to an absolute difference between the current modified frame $O_t$ and the estimate of the current modified frame $0'_t$
- normalizing the simple mask, to obtain a normalized simple mask comprising coefficients ranging between [0,1],
- obtaining the updated current modified frame $O_t''$ by applying the normalized simple mask to the current modified frame $O_t$ and the complement of the normalized simple mask to the estimate of the current modified frame $O'_t$:

$$O_t'' = (1 - M_{norm}) \times O_t' + M_{norm} \times O_t$$

where $M_{norm}$ is the normalized simple mask.

According to at least one embodiment, the method or the device further comprises updating the simple mask by passing the simple mask, or normalized simple mask, to a convolutional neural network. In this case, obtaining the updated current modified frame $O_t''$ applies the updated mask to the current modified frame $O_t$ and the complement of the updated mask to the estimate of the current modified frame $O_t'$:

$$O_t'' = (1 - M_{upd}) \times O_t' + M_{upd} \times O_t,$$

where $M_{upd}$ is the updated mask.

In particular, the convolutional neural network comprises three layers. For example, the convolutional neural network comprises a first layer comprising a filter with 8 output channels of size 9x9, a second layer comprising a filter with 16 output channels of size 3x3, and a third layer comprising a filter with 32 output channels of size 3x3.

According to at least one embodiment, the method or the device further comprises obtaining an adjusted modified frame $O_t^o$, from the updated current modified frame $O_t''$ and the current modified frame $O_t$.

In particular, obtaining an adjusted current modified frame comprises:

- obtaining an occlusion mask,

- obtaining the adjusted current modified frame $O_t^o$ by applying the occlusion mask to the updated current modified frame $O_t''$ and the complement of the occlusion mask to the current modified frame $O_t$:

$$O_t^o = M_{occ} \times O_t'' + (1 - M_{occ}) \times O_t,$$

where $M_{occ}$ is the occlusion mask.

For example, for a pixel (x, y) in the current original image, the occlusion mask is equal to:

- 0 if either $|\tilde{f} + \hat{f}|^2 > 0.01 (|\hat{f}|^2 + |\hat{f}|^2) + 0.5$ or $|\hat{\nabla u}|^2 + |\hat{\nabla v}|^2 > 0.01|\hat{f}| + 0.002$,
- 1 otherwise,

where:

- $\tilde{f}$ is the estimate of the optical flow between the preceding original frame and the current original image,
- $\hat{f}$ is the estimate of the optical flow between the current original image and the preceding original frame,
- $\hat{\nabla u}$ is the gradient of the estimate of the optical flow between the current original image and the preceding original frame for the u-component of the pixel (x, y),
- $\hat{\nabla v}$ is the gradient of the estimate of the optical flow between the current original image and the preceding original frame for the v-component of the pixel (x, y).

According to at least one embodiment, the convolutional neural network is previously trained by minimizing a loss function which is a linear combination of $M_{occ} \times \left\| O_t'' - O_t' \right\|^2$ and $(1 - M_{occ}) \times \left\| O_t'' - O_t \right\|^2$, where $M_{occ}$ is the occlusion mask.

According to at least one embodiment, obtaining a current modified frame comprises applying a style to the current original frame.

According to at least one embodiment, obtaining a current modified frame comprises passing the current original frame to a feed forward network. For example, said feed forward network comprises three layers. In particular, said feed forward network comprises a first layer comprising a filter with 8 output channels, a second layer comprising a filter with 16 output channels, and a third layer comprising a filter with 32 output channels.

**Claims**

1. A method for processing a sequence of original frames, comprising, for at least one original frame of the sequence, called a current original frame:

   - obtaining (11) a current modified frame $O_t$, from the current original frame $I_t$,
   - estimating (12) an optical flow between a preceding original frame $I_{t-1}$ and the current original frame $I_t$,
   - obtaining (13) an estimate of the current modified frame $O'_t$ from the estimated optical flow and a preceding modified frame, obtained from the preceding original frame $I_{t-1}$ and previously updated or adjusted, and

   - obtaining (14) an updated current modified frame $O''_t$, from the current modified frame $O_t$ and the estimate of the current modified frame $O'_t$.

2. A device for processing a sequence of original frames, wherein said device comprises at least one processor adapted and configured for:
   for at least one original frame of the sequence, called a current original frame:

   - obtaining a current modified frame $O_t$, from the current original frame $I_t$,
   - estimating an optical flow between a preceding original frame $I_{t-1}$ and the current original frame $I_t$,
   - obtaining an estimate of the current modified frame $O'_t$ from the estimated optical flow and a preceding modified frame, obtained from the preceding original frame $I_{t-1}$ and previously updated or adjusted, and

   - obtaining an updated current modified frame $O''_t$, from the current modified frame $O_t$ and the estimate of the current modified frame $O'_t$.

3. The method according to claim 1, or the device according to claim 2, wherein obtaining (14) an updated current modified frame $O''_t$ comprises:

   - obtaining (141) a simple mask corresponding to an absolute difference between the current modified frame $O_t$ and the estimate of the current modified frame $O'_t$,
   - normalizing (142) the simple mask, to obtain a normalized simple mask comprising coefficients ranging between [0,1],

   - obtaining (143) the updated current modified frame $O''_t$ by applying the normalized simple mask to the current modified frame $O_t$ and the complement of the normalized simple mask to the estimate of the current modified frame $O'_t$:

$$O''_t = (1 - M_{norm}) \times O'_t + M_{norm} \times O_t$$

   where $M_{norm}$ is the normalized simple mask.

4. The method according to claim 3, or the device according to claim 3, further comprising updating the simple mask by passing the simple mask, or normalized simple mask, to a convolutional neural network, and wherein obtaining the updated current modified frame $O''_t$ applies the updated mask to the current modified frame $O_t$ and the complement of the updated mask to the estimate of the current modified frame $O'_t$:

$$O''_t = (1 - M_{upd}) \times O'_t + M_{upd} \times O_t,$$

   where $M_{upd}$ is the updated mask.

5. The method according to claim 4, or the device according to claim 4, wherein the convolutional neural network comprises three layers.

6. The method according to claim 5, or the device according to claim 5, wherein the convolutional neural network comprises a first layer comprising a filter with 8 output channels of size 9x9, a second layer comprising a filter with 16 output channels of size 3x3, and a third layer comprising a filter with 32 output channels of size 3x3.

7. The method according to anyone of claims 1 or 3 to 6, or the device according to anyone of claims 2 to 6, further comprising obtaining (21) an adjusted modified frame $O_t^o$, from the updated current modified frame $O_t''$ and the current modified frame $O_t$.

8. The method according to claim 7, or the device according to claim 7, wherein obtaining an adjusted current modified frame comprises:

   - obtaining (211) an occlusion mask,

   - obtaining (212) the adjusted current modified frame $O_t^o$ by applying the occlusion mask to the updated current modified frame $O_t''$ and the complement of the occlusion mask to the current modified frame $O_t$:

$$O_t^o = M_{occ} \times O_t'' + (1 - M_{occ}) \times O_t,$$

   where $M_{occ}$ is the occlusion mask.

9. The method according to claim 8, or the device according to claim 8, wherein, for a pixel (x, y) in the current original image, the occlusion mask is equal to:

   - 0 if either $|\tilde{f} + \hat{f}|^2 > 0.01 \, (|\tilde{f}|^2 + |\hat{f}|^2) + 0.5$ or $|\nabla \hat{u}|^2 + |\nabla \hat{v}|^2 > 0.01|\hat{f}| + 0.002$,
   - 1 otherwise,

   where:

   - $\tilde{f}$ is the estimate of the optical flow between the preceding original frame and the current original image,
   - $\hat{f}$ is the estimate of the optical flow between the current original image and the preceding original frame,
   - $\nabla \hat{u}$ is the gradient of the estimate of the optical flow between the current original image and the preceding original frame for the u-component of the pixel (x, y),
   - $\nabla \hat{v}$ is the gradient of the estimate of the optical flow between the current original image and the preceding original frame for the v-component of the pixel (x, y).

10. The method according to anyone of claims 4 and 5 and to anyone of claims 7 to 9, or the device according to anyone of claims 4 and 5 and to anyone of claims 7 to 9, wherein the convolutional neural network is previously trained by minimizing a loss function which is a linear combination of $M_{occ} \times \left\| O_t'' - O_t' \right\|^2$ and $(1 - M_{occ}) \times \left\| O_t'' - O_t \right\|^2$, where $M_{occ}$ is the occlusion mask.

11. The method according to anyone of claims 1 or 3 to 10, or the device according to anyone of claims 2 to 10, wherein obtaining a current modified frame comprises applying a style to the current original frame.

12. The method according to anyone of claims 1 or 3 to 11, or the device according to anyone of claims 2 to 11, wherein obtaining a current modified frame comprises passing the current original frame to a feed forward network.

13. The method according to claim 12, or the device according to claim 12, wherein said feed forward network comprises three layers.

14. The method according to claim 13, or the device according to claim 13, wherein said feed forward network comprises a first layer comprising a filter with 8 output channels, a second layer comprising a filter with 16 output channels, and a third layer comprising a filter with 32 output channels.

**15.** A computer program product downloadable from a communication network and/or recorded on a medium readable by computer and/or executable by a processor comprising software code adapted to perform a method according to anyone of claims 1 or 3 to 14 when it is executed by a processor.

Fig. 1

Fig. 2

EP 3 588 439 A1

Fig. 3

**EP 3 588 439 A1**

Europäisches Patentamt

European Patent Office

Office européen des brevets

## EUROPEAN SEARCH REPORT

Application Number

EP 18 30 5803

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONGDONG CHEN ET AL: "Coherent Online Video Style Transfer", ARXIV.ORG, CORNELL UNIVERSITY LIBRARY, 201 OLIN LIBRARY CORNELL UNIVERSITY ITHACA, NY 14853, 27 March 2017 (2017-03-27), XP080755791, DOI: 10.1109/ICCV.2017.126 | 1-6, 10-15 | INV. G06T11/00 |
| A | * abstract * * sections 3.2, 3.3 * | 7-9 | |
| A | JUSTIN JOHNSON ET AL: "Perceptual Losses for Real-Time Style Transfer and Super-Resolution", ARXIV.ORG, CORNELL UNIVERSITY LIBRARY, 201 OLIN LIBRARY CORNELL UNIVERSITY ITHACA, NY 14853, 27 March 2016 (2016-03-27), XP080692177, * abstract * * sections 3, 4.1 * * figure 2 * | 1-15 | |
| A | US 7 639 741 B1 (HOLT GARY R [US] ET AL) 29 December 2009 (2009-12-29) * abstract * * column 8 * | 1-15 | TECHNICAL FIELDS SEARCHED (IPC)  G06T |
| A | US 2009/278961 A1 (MOHANTY KAMINI KANTA [IN] ET AL) 12 November 2009 (2009-11-12) * abstract * * paragraph [0018] * * paragraph [0038] * * paragraph [0073] - paragraph [0078] * | 1-15 | |

-/--

The present search report has been drawn up for all claims

| Place of search | Date of completion of the search | Examiner |
|---|---|---|
| Munich | 29 November 2018 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

17

Europäisches
Patentamt

European
Patent Office

Office européen
des brevets

# EUROPEAN SEARCH REPORT

Application Number

EP 18 30 5803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAN ERIC KYPRIANIDIS ET AL: "State of the Art: A Taxonomy of Artistic Stylization Techniques for Images and Video", IEEE TRANSACTIONS ON VISUALIZATION AND COMPUTER GRAPHICS, IEEE SERVICE CENTER, LOS ALAMITOS, CA, US, vol. 19, no. 5, 1 May 2013 (2013-05-01), pages 866-885, XP011497433, ISSN: 1077-2626, DOI: 10.1109/TVCG.2012.160 * the whole document * ----- | 1-15 | |

|  | TECHNICAL FIELDS SEARCHED (IPC) |
|---|---|

The present search report has been drawn up for all claims

| Place of search | Date of completion of the search | Examiner |
|---|---|---|
| Munich | 29 November 2018 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

page 2 of 2

**EP 3 588 439 A1**

## ANNEX TO THE EUROPEAN SEARCH REPORT
## ON EUROPEAN PATENT APPLICATION NO.

EP 18 30 5803

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2018

| Patent document cited in search report | | Publication date | Patent family member(s) | Publication date |
|---|---|---|---|---|
| US 7639741 | B1 | 29-12-2009 | NONE | |
| US 2009278961 | A1 | 12-11-2009 | NONE | |

For more details about this annex : see Official Journal of the European Patent Office, No. 12/82

EPO FORM P0459

**19**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Image Style Transfer Using Convolutional Neural Networks. *IEEE Conference on Computer Vision and Pattern Recognition (CVPR),* 2016
- Perceptual losses for real-time style. *European Conference on Computer Vision,* 2016
- **E. ILG et al.** Flownet 2.0: Evolution of optical flow estimation with deep networks. *IEEE Conference on Computer Vision and Pattern Recognition (CVPR),* 2017
- **J. REVAUD et al.** Epicflow: Edge-preserving interpolation of correspondences for optical flow. *IEEE Conference on Computer Vision and Pattern Recognition (CVPR),* 2015

- **P. WEINZAEPFEL et al.** Deepflow: Large displacement optical flow with deep matching. *IEEE International Conference on Computer Vision (ICCV),* 2013
- **N. SUNDARAM et al.** Dense point trajectories by GPU-accelerated large displacement optical flow. *European conference on computer vision,* 2010
- **BUTLER, D. J. et al.** A naturalistic open source movie for optical flow evaluation. *European Conference on Computer Vision (ECCV),* 2012, http://sintel.is.tue.mpg.de
- **J. JOHNSON et al.** *Perceptual losses for real-time style*